# EUROPEAN PATENT APPLICATION

(11) **EP 1 566 982 A2**
(43) Date of publication of application: **24.08.2005**
(21) Application number: 05003649.0
(22) Date of filing: 21.02.2005
(51) Int. Cl.: H04Q 7/36

(54) **Method and apparatus for managing a sectorized antenna system of a base station in a mobile communication system**

(30) Priority: 21.02.2004 KR 2004011702
(71) Applicant: SAMSUNG ELECTRONICS CO., LTD., Gyeonggi-do (KR)
(72) Inventor: Jung, Dae-Kwon, Yeongtong-gu Suwon-si Gyeonggi-do (KR); Kim, Young-Ky, Yeongtong-gu Suwon-si Gyeonggi-do (KR); Jeon, Jae-Ho, Yeongtong-gu Suwon-si Gyeonggi-do (KR); Yang, Ha-Young, Yeongtong-gu Suwon-si Gyeonggi-do (KR); Byun, Myung-Kwang, Yeongtong-gu Suwon-si Gyeonggi-do (KR); Lee, Hee-Kwang, Yeongtong-gu Suwon-si Gyeonggi-do (KR); Park, Chang-Soo, Yeongtong-gu Suwon-si Gyeonggi-do (KR)
(74) Representative: Lang, Johannes

(57) **Abstract**

An apparatus and method are provided for managing sectors in a transmission operation of a base station including a smart antenna system forming directional beams using a plurality of antenna elements. The apparatus and method comprise determining whether a call connected to a mobile station is a voice call or a data call; multiplying a transmission signal to the mobile station by predetermined complex weight vectors selected according to the call type; and forming a transmission beam for a corresponding sector by summing the multiplied values according to the antenna elements.

## Description

### BACKGROUND OF THE INVENTION

### Field of the Invention

The present invention relates generally to a method and apparatus for managing a base station in a mobile communication system. In particular, the present invention relates to a base station sector management method and apparatus for separating base station sector management for a voice service and a data service, and independently performing beamforming of base station antennas according to characteristics of the voice service and the data service, thereby increasing system capacity.

### Description of the Related Art

In general, mobile communication systems are classified, according to their communication methods, into a Frequency Division Multiple Access (FDMA) system in which a predetermined frequency band is divided into a plurality of channels and respective subscribers are allocated their own unique frequency channels, a Time Division Multiple Access (TDMA) system in which a frequency channel is time-shared by a plurality of subscribers, and a Code Division Multiple Access (CDMA) system in which a plurality of subscribers use the same frequency band at the same time band but they are allocated different codes.

With the rapid development of communication technology, mobile communication systems have reached a phase of providing a packet data service capable of transmitting a large volume of digital data as well as conventional voice communication service. A mobile communication system for providing the high-speed data service commonly adopts the CDMA scheme, and the CDMA scheme, as is well known, is roughly classified into a synchronous scheme adopted in the United States of America (USA) and an asynchronous scheme adopted in Europe and Japan, and various research into the synchronous and asynchronous schemes are being conducted separately.

Mobile communication systems, the study of which is being made in relation to the packet data service, include Evolution Data Only (EV-DO) capable of enabling high-speed packet transmission on a synchronous basis, Evolution of Data and Voice (EV-DV) capable of supporting both a voice service and a high-speed packet data service, and Wideband CDMA (W-CDMA) capable of enabling high-speed packet transmission on an asynchronous basis, all of which seek to meet International Mobile Telecommunication-2000 (IMT-2000) standards, which is the next generation mobile communication system.

In packet data service, because of its service characteristic of providing multimedia contents to a mobile station (MS), a base station (BS) requires an increase in capacity of a forward link to the mobile station. As a typical solution for increasing a capacity of a forward link, there is a scheme of increasing a data transmission capacity of a base station by sectoring antennas of the base station. This scheme replaces the conventional omni-directional antenna having a 360°-radiation pattern with a directional antenna having a 3-sector structure divided by, for example, 120° to minimize interference between mobile stations located in different sectors, thereby increasing a data transmission capacity of the base station.

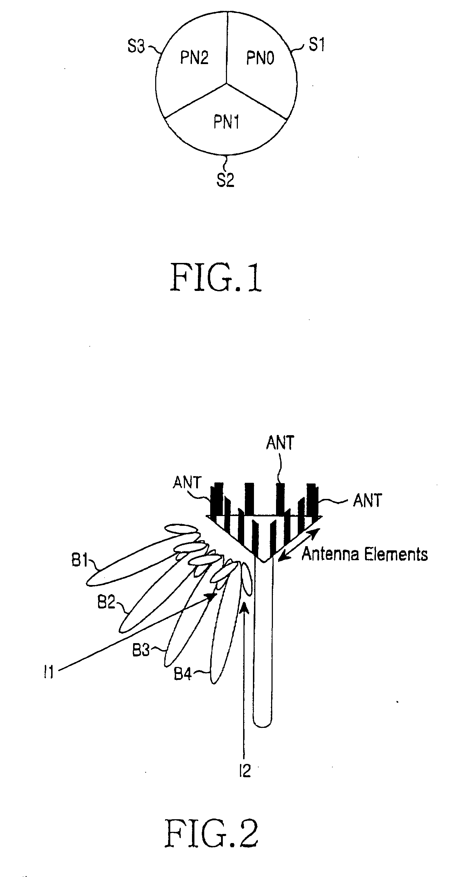

FIG. 1 is a conceptual diagram illustrating a 3-sector structure of a base station in a general mobile communication system. In the 3-secotor structure of FIG. 1, one cell managed by one base station is divided into three sectors S1 to S3, and each of the sectors S1 to S3 has a plurality of sector antennas to transmit/receive radio signals of the corresponding sector. Generally, a base station of a CDMA mobile communication system divides its own cell into three sectors S1 to S3 using different pseudo-random noise (PN) code offsets PN0, PN1 and PN 2 of the same Frequency Assignment (FA), as illustrated in FIG. 1, and independently manages the three sectors S1 to S3. Such a management scheme is equally applied to a voice service and a data service.

The a cell is divided into a plurality of sectors as shown in FIG. 1 to reuse the same frequency channel by taking a distance into consideration, while excluding mutual interference between frequency channels. Although the three sectors S1 to S3 use the same frequency in FIG. 1, because antennas of the base station face only their sectors, channel interference reduces to 1/3 on average, so that the base station system theoretically triples the channel capacity supportable to mobile stations located in its cell.

Although current mobile communication systems having a lower data rate, such as IS-95A and IS-95B, could secure a sufficient channel capacity with a 3-sector antenna system, the increasing use of a high-speed data service like EV-DO makes it difficult to secure a channel capacity required for smooth management of a base station system with the conventional 3-sector antenna. Therefore, there is a demand for a new scheme capable of greatly increasing a capacity of the base station system, and a so-called smart antenna system, as the proposed scheme, attracts public attention.

FIG. 2 is a conceptual diagram of a base station with a smart antenna in a general mobile communication system. The smart antenna system refers to high-tech signal processing and antenna technology for maximizing transmission/reception performance and capacity of radio frequency (RF) signals by adaptively controlling beam patterns of antennas ANT according to variations in the RF signal environment using, for example, an adaptive array antenna and high-performance digital signal processing technology. The smart antenna system, unlike the conventional antenna system forming beams in all directions, forms optimum directional beams B1 to B4 in directions of mobile stations of desired subscribers using complex weight vectors. In addition, the smart antenna system forms null patterns in directions 11 and 12 of interference signals caused by other subscribers' mobile stations to minimize the interference signals, thereby increasing communication quality and a capacity of the base station system.

While the existing base station system is very low in terms of a ratio of the total transmission power transmitted from the base station to a subscriber's mobile station to effective reception power of the corresponding mobile station, a base station system using the smart antenna shown in FIG. 2 provides optimum reception signal power to a subscriber by optimally combining reception signals and remarkably reducing an interference signal level in a mobile station using beamforming control. That is, advantages of the base station system using the smart antenna consist of a high antenna gain, cancellation of interference and multipath signals, spatial diversity, excellent power efficiency and coverage, a high bit rate, and low power consumption.

The smart antenna systems are classified into a switched beam antenna system, an adaptive array antenna system, and a recently-proposed cell sculpting system. In a 3-sector base station, because each sector services its own fixed area, when traffics concentrate upon a particular area, frequency resources are inefficiently used, causing an excessive increase in expenses required for maintenance of the frequency resources. The cell sculpting system, a scheme proposed to overcome the problem of the conventional 3-sector base station, adaptively adjusts directions of sectors and widths of transmission beams according to traffic conditions to increase the efficiency of frequency resources and increase system capacity and coverage.

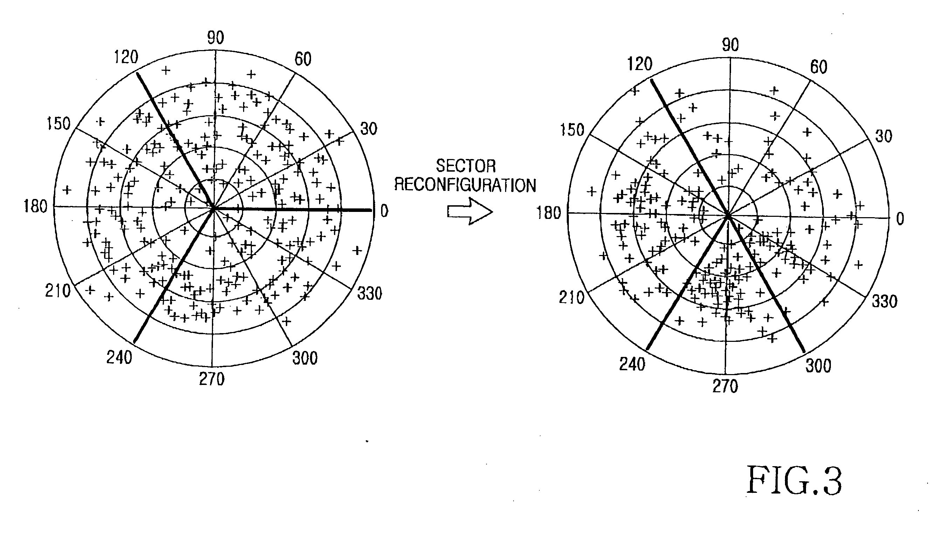

FIG. 3 is a conceptual diagram illustrating a 3-sector structure in which beams are formed using the cell sculpting system. The cell sculpting system forms a plurality of transmission beams with a narrow beam width using multiple array antennas, and then calculates traffic of respective transmission beams to synthesize the beams such that respective sectors are equal in traffic, thereby reforming sectors as shown in FIG. 3. As a result, a sector having the largest amount of traffic has a narrower width, while a sector having the smallest amount of traffic has a wider width. Here, directions and widths of the sectors are not adjusted in real time, but adjusted after a variation in traffic is monitored for a predetermined time. As described above, the smart antenna system is a promising alternative plan for increasing a capacity of a base station system, and the development thereof is being actively pursued. However, the smart antenna system is being developed in such a way that the 3-sector structure is maintained by taking handoff during a voice call into consideration.

That is, if a cell of a base station is divided into more than three sectors supporting data service, it will contribute to a decrease in interference between subscribers and an increase in subscriber capacity. However, if the cell is divided into too many sectors, handoff occurs more frequently. As a result, the voice service susceptible to a handoff delay increases in call drop rates, causing a reduction in system efficiency and call quality. Therefore, in the conventional base station system where a voice service and a data service are integratedly managed in each sector, it is not possible to divide the cell into an increased number of sectors for the data service due to the limitation stated above.

### SUMMARY OF THE INVENTION

It is, therefore, an object of the present invention to provide a base station sector management method and apparatus for separately performing base station sector management according to a service type in a mobile communication system.

It is another object of the present invention to provide a base station sector management method and apparatus for separately performing beamforming of base station antennas according to a service type in a mobile communication system.

According to a first aspect of the present invention, there is provided a method for managing sectors in a transmission operation of a base station including a smart antenna system forming directional beams using a plurality of antenna elements. The method comprises the steps of determining whether a call connected to a mobile station is a voice call or a data call; multiplying a transmission signal to the mobile station by predetermined complex weight vectors selected according to a type of call; and forming a transmission beam for a corresponding sector by summing the multiplied values according to the antenna elements.

According to a second aspect of the present invention, there is provided a method for managing sectors in a reception operation of a base station including a smart antenna system forming directional beams using a plurality of antenna elements. The method comprises the steps of determining whether a call connected to a mobile station is a voice call or a data call; multiplying a reception signal from the mobile station by complex weight vectors selected according to a type of the set call; and restoring the reception signal by summing the multiplied values according to the antenna elements;

According to a third aspect of the present invention, there is provided a transmission sector management apparatus of a base station including a smart antenna system forming directional beams using a plurality of antenna elements. The apparatus comprises a message receiver for receiving a predetermined transmission control message including call discrimination information for indicating a voice call or a data call, from an upper layer when a call is connected to a mobile station; a transmission lookup table for storing a plurality of complex weight vectors for transmission beamforming separated according to the call type; a transmission controller for receiving the transmission control message, performing an overall control operation for sector and beam forming according to the type of call based on the transmission control message, and selecting corresponding complex weight vectors; and a beamforming unit for multiplying a transmission signal from the mobile station by the complex weight vectors selected by the transmission controller, and forming transmission beams by summing the multiplied values according to antenna elements.

According to a fourth aspect of the present invention, there is provided a reception sector management apparatus of a base station including a smart antenna system forming directional beams using a plurality of antenna elements. The apparatus comprises a message receiver for receiving a predetermined reception control message including call discrimination information indicating a voice call or a data call, from an upper layer when a call is connected to a mobile station; a reception lookup table for storing a plurality of complex weight vectors for beam signal restoration separated according to the type of call;' a reception controller for receiving the reception control message, performing an overall control operation for beam signal restoration according to the type of call based on the reception control message, and selecting corresponding complex weight vectors; and a beam signal restoring unit for multiplying a reception signal from the mobile station by the complex weight vectors selected by the reception controller, and restoring the reception signal by summing the multiplied signals according to a corresponding subscriber signal.

### BRIEF DESCRIPTION OF THE DRAWINGS

The above and other objects, features and advantages of the present invention will become more apparent from the following detailed description when taken in conjunction with the accompanying drawings in which:
FIG. 1 is a conceptual diagram illustrating a conventional 3-sector structure of a base station in a conventional mobile communication system;
FIG. 2 is a conceptual diagram of a base station with a smart antenna in a conventional mobile communication system;
FIG. 3 is a conceptual diagram illustrating a 3-sector structure in which beams are formed using a conventional cell sculpting system;
FIG. 4A is a conceptual diagram illustrating a sector structure for a voice service of a base station according to an embodiment of the present invention;
FIG. 4B is a conceptual diagram illustrating a sector structure for a data service of a base station according to an embodiment of the present invention;
FIG. 5 is a diagram illustrating an antenna structure for implementing a base station sector structure according to an embodiment of the present invention;
FIG. 6A is a diagram illustrating beam patterns formed by respective antenna elements of a base station before beamforming according to an embodiment of the present invention;
FIG. 6B is a diagram illustrating beam patterns in which a narrow-width beam is formed in a particular sector according to an embodiment of the present invention;
FIG. 6C is a diagram illustrating examples in which narrow-width beams are formed in 12 sectors for a data service according to an embodiment of the present invention;
FIG. 6D is a diagram illustrating examples in which wide-width beams are formed in 3 sectors for a voice service according to an embodiment of the present invention;
FIG. 7 is a block diagram illustrating a structure of a transmission apparatus in a sector management apparatus of a base station according to an embodiment of the present invention;
FIG. 8A is a diagram illustrating an example of a basic structure of a transmission/reception lookup table according to an embodiment of the present invention;
FIG. 8B is a diagram illustrating an example of a structure of a transmission/reception lookup table for a voice service according to an embodiment of the present invention, applied to a ULA antenna structure;
FIG. 8C is a diagram illustrating an example of a structure of a transmission/reception lookup table for a data service according to an embodiment of the present invention, applied to which a ULA antenna structure;
FIG. 8D is a diagram illustrating an example of a structure of a transmission/reception lookup table for voice and data services according to an embodiment of the present invention, applied to a UCA antenna structure;
FIG. 9 is a block diagram illustrating structures of the beamforming unit and the transmission signal converter illustrated in FIG. 7;
FIG. 10 is a block diagram illustrating a structure of a reception apparatus in a sector management apparatus of a base station according to an embodiment of the present invention; and
FIG. 11 is a block diagram illustrating structures of the reception signal converter and the beam signal restoring unit illustrated in FIG. 10.

### DETAILED DESCRIPTION OF THE PREFERRED EMBODIMENTS

Several embodiments of the present invention will now be described in detail with reference to the accompanying drawings. In the following description, a detailed description of known functions and configurations incorporated herein has been omitted for conciseness.

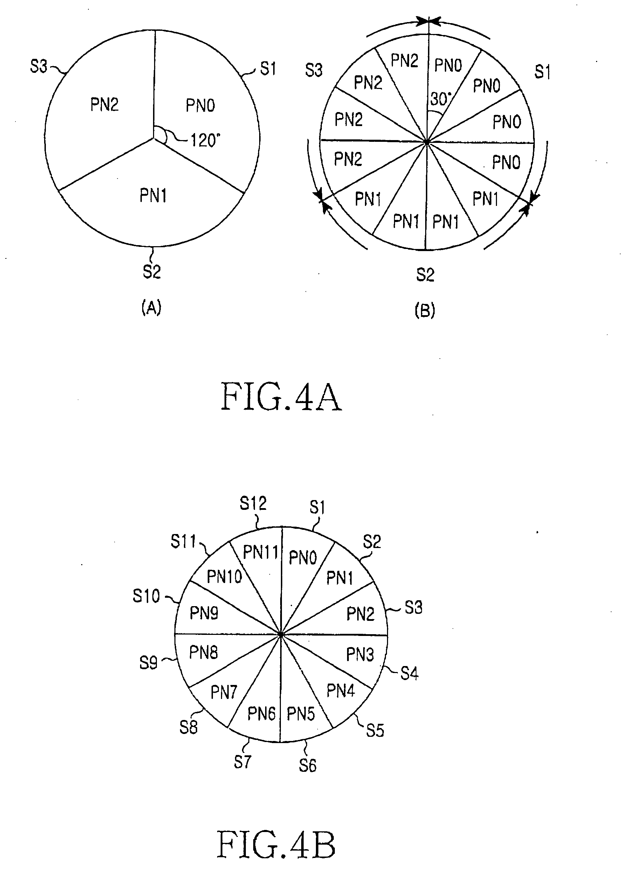

With reference to FIGs. 4A and 4B, a description will now be made of an embodiment of the present invention. FIG. 4A illustrates a sector structure for a voice service of a base station according to an embodiment of the present invention, and FIG. 4B illustrates a sector structure for a data service of a base station according to an embodiment of the present invention. Herein, for convenience, a description of a sector structure and a beamforming operation for a voice service or a data service will be made on the assumption that the number of antennas of the base station is 12. It should be appreciated by those skilled in the art that the base station antenna system is not limited to a structure using 12 antennas. The number of antennas can be larger or smaller than 12 without departing from the scope of the present invention.

FIG. 4A illustrates an example in which one cell is divided into, for example, 3 sectors S1, S2 and S3 using different PN code offsets for a voice service. The proposed 3-sector structure for a voice service forms 3 wide beams having a 120°-beam width, as shown in (A) of FIG. 4A, using 12 antenna elements having a narrow beam width. A base station divides one cell into 3 sectors S1, S2 and S3 with the 3 beams and allocates different PN code offsets PN0, PN1 and PN2 to the sectors S1, S2 and S3.

In addition, the 3-sector structure for a voice service forms 12 narrow beams having a 30°-beam width, as shown in (B) of FIG. 4A, using 12 antenna elements. The base station classifies the 12 beams into the three sectors S1, S2 and S3 by grouping the 12 beams into 4 beams, and allocates different PN code offsets PN0, PN1 and PN2 to the sectors S1, S2 and S3. FIG. 4B illustrates an example in which one cell is divided into 12 sectors S1 to S12 and different PN code offsets PN0 to PN11 are allocated to the respective sectors, for a data service, according to an embodiment of the present invention. The number of antenna elements can be set higher than or equal to the number of sectors.

A data service, such as an Internet access service, is characterized by high levels of burstiness in transmission and low susceptibility to a time delay using a retransmission mechanism. Therefore, an embodiment of the present invention separates sector management for a data service from sector management for a voice service in such a manner that the number of sectors allocated for the data service is preferably larger than the number of sectors allocated for the voice service in an antenna beamforming process as shown in (B) of FIG. 4A and FIG. 4B according to the characteristics of the voice service and the data service, thereby providing a higher system capacity for the data service as compared with the conventional base station management scheme.

A description will now be made of an antenna structure applied to the foregoing sector management schemes according to an embodiment of the present invention.

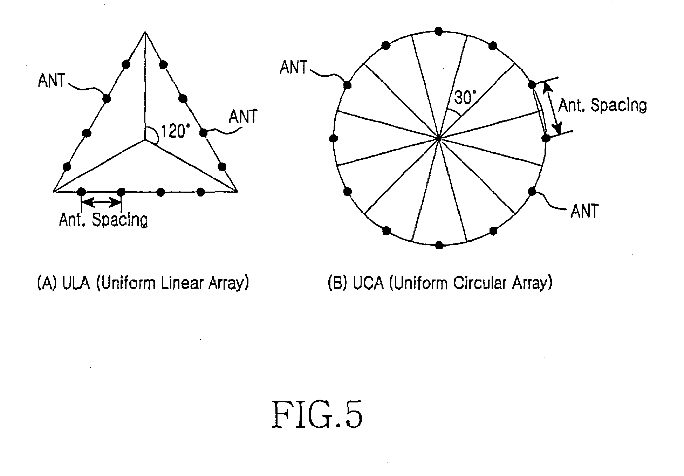

FIG. 5 is a diagram illustrating an antenna structure for implementing a base station sector structure according to an embodiment of the present invention, wherein well-known antenna array structures of Uniform Linear Array (ULA) and Uniform Circular Array (UCA) are illustrated in (A) and (B) of FIG. 5. Specifically, FIG. 5 illustrates a 12-sector structure by way of example, in which sector management for a voice service and sector management for a data service are independently performed according to the characteristics of the services.

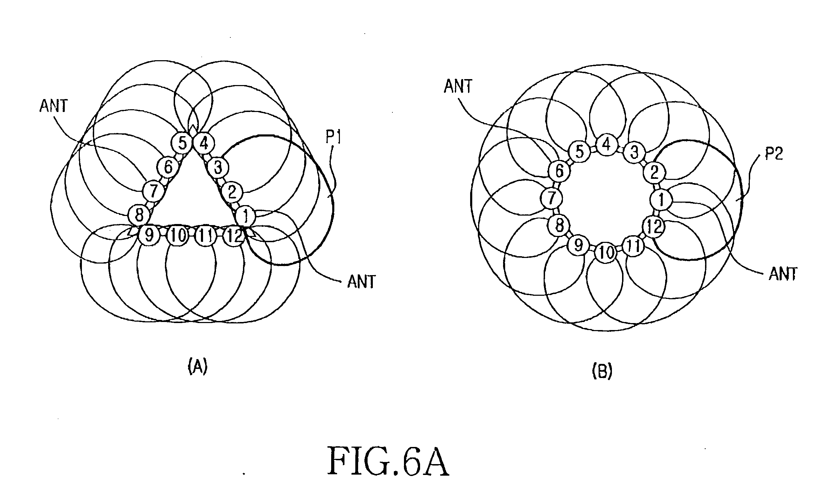

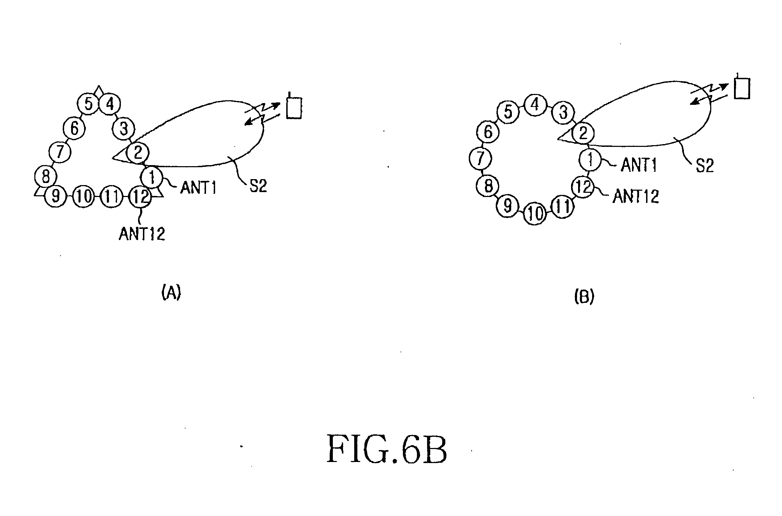

FIG. 6A is a diagram illustrating beam patterns formed by respective antenna elements of a base station before beamforming according to an embodiment of the present invention. Specifically, (A) and (B) of FIG. 6A illustrate beam patterns P1 and P2 of respective antenna elements ANT before beamforming using complex weight vectors in a ULA antenna and a UCA antenna, respectively. In FIG. 6A, the respective antenna elements have wide beam patterns before beamforming through complex weight vectors like the beam patterns P1 and P2 shown by bold solid lines. In the meantime, for example, if a user uses a data service in a second sector S2 as shown in FIG. 6B, complex weight vector values W₁⁽²⁾, W₂⁽²⁾,···, W₁₂⁽²⁾ forming narrow beams in the second sector S2 are multiplied by 12 antenna elements ANT1 to ANT 12, forming beams. Beam patterns of all of the antennas are illustrated in (A) and (B) of FIG. 6B.

Assuming that users of mobile stations in communication are scattered over the 12 sectors, beam patterns of all of the antennas ANT1 to ANT 12 are illustrated in (A) and (B) of FIG. 16C. Although a data service is provided through narrow beam patterns in the embodiment of the present invention, a voice service can also be provided using the narrow beam patterns in such a manner that 12 narrow beams are formed using 12 antenna elements, the 12 narrow beams are classified into three 4-narrow beam groups, and different PN code offsets are allocated to the three 4-narrow beam groups.

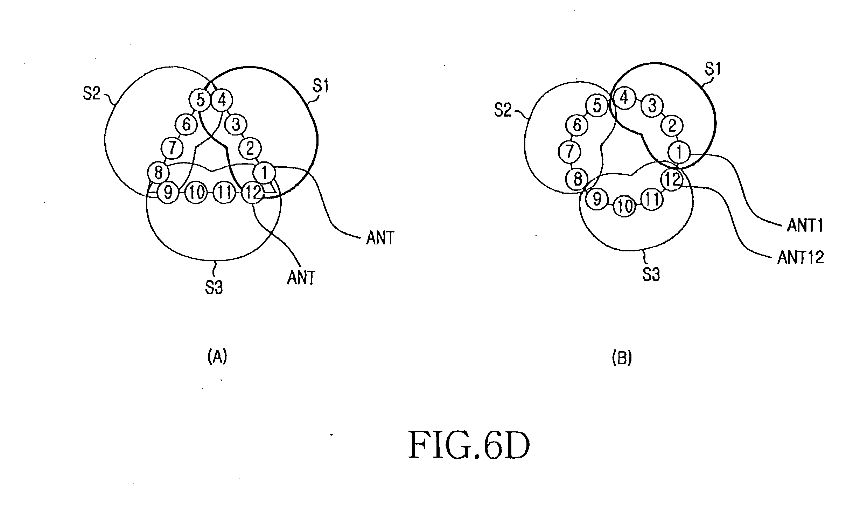

(A) and (B) of FIG. 6D illustrate beam patterns of a 3-sector (S1, S2, S3) structure made by multiplying predetermined complex weight vector values making 3 sectors in the beam patterns before beamforming, shown in FIG. 6A, by 12 antenna elements ANT1 to ANT12 when users use a voice service.

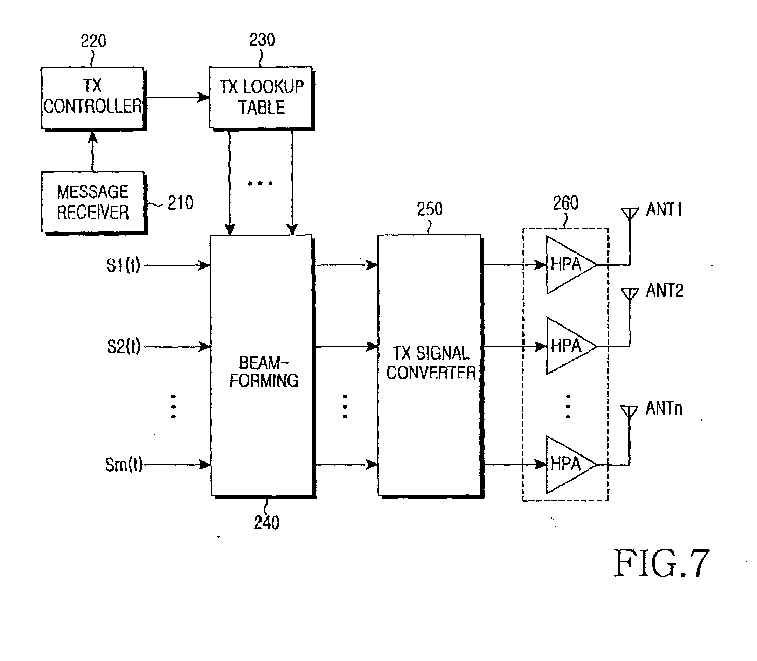

FIG. 7 is a block diagram illustrating a structure of a transmission apparatus in a sector management apparatus of a base station according to an embodiment of the present invention.

When a call for each subscriber is set up, a message receiver 210 of the transmission apparatus receives a predetermined transmission control message including call discrimination information for distinguishing a type of a voice call or a data call from an upper layer through a base station controller (BSC; not shown), and delivers the received transmission control message to a transmission controller 220. The transmission control message includes FA information as well as the call discrimination information. In addition, the transmission control message can include modification information of complex weight vectors due to a change in position of a mobile station. The transmission controller 220 analyzes the transmission control message, performs the overall control operation for sector and beam forming separated for a voice service or a data service with a transmission lookup table 230 according to a corresponding call, and outputs predetermined address information instructing the output of corresponding complex weight vectors.

In an embodiment of the present invention, the transmission lookup table 230 pre-stores FA information and a plurality of complex weight vector values separated for a voice call or a data call in association with their corresponding address information, and outputs complex weight vector values for input address information to a beamforming unit 240.

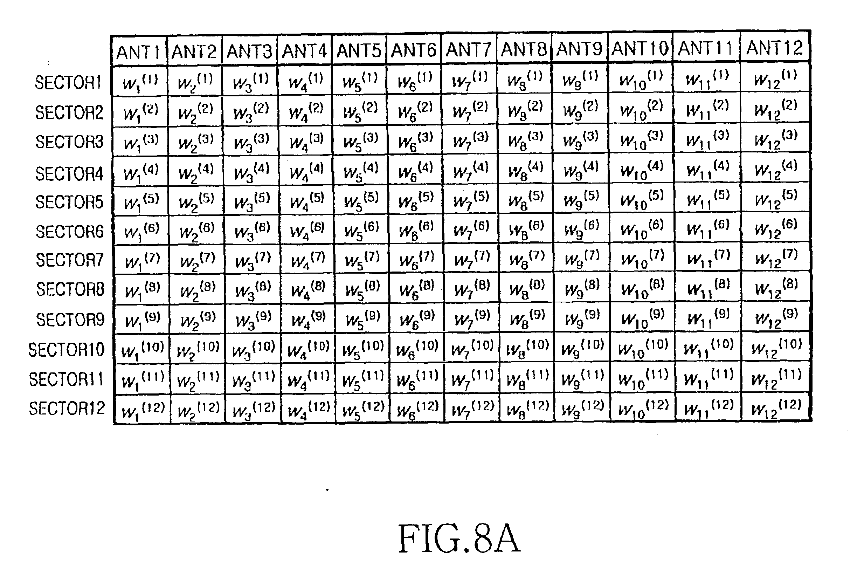

With reference to FIGs. 8A to 8D, a description will now be made of setting of complex weight vectors according to an embodiment of the present invention.

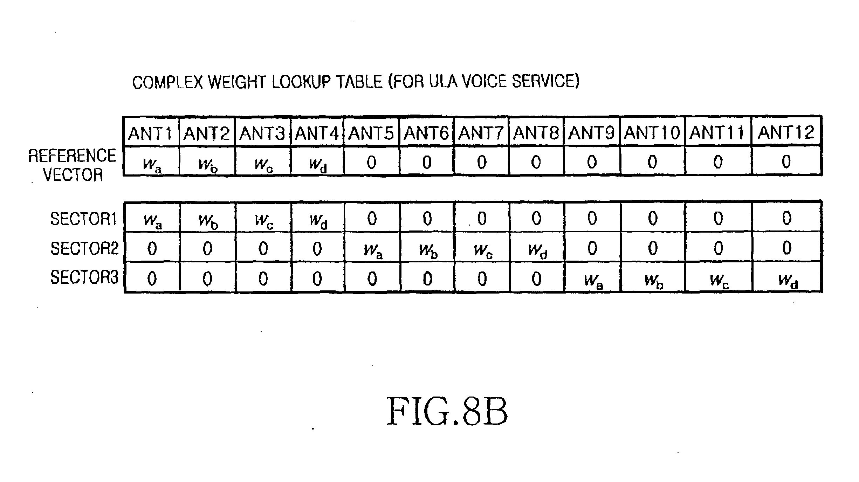

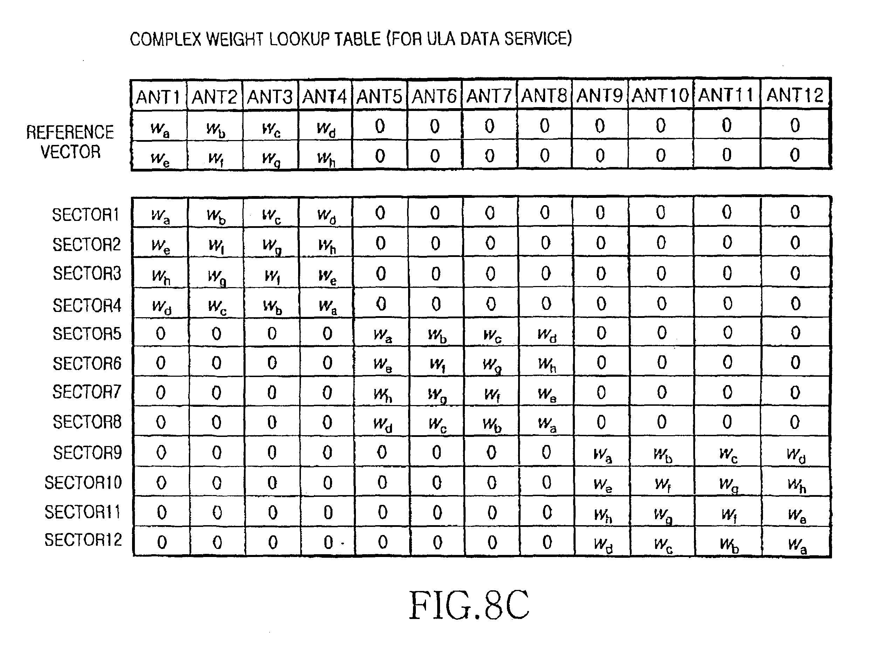

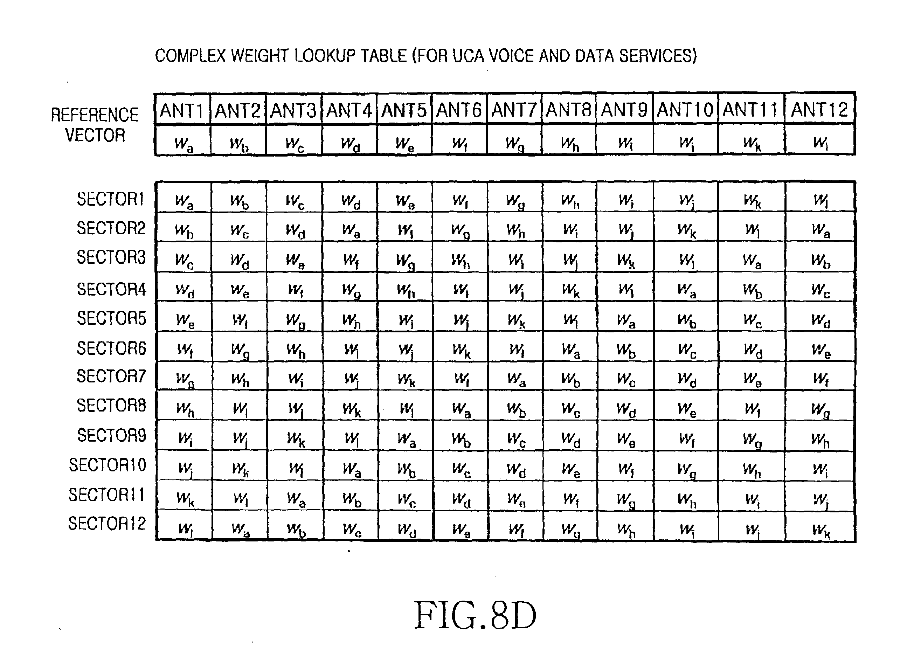

FIG. 8A illustrates a basic structure of a transmission/reception lookup table according to an embodiment of the present invention. In FIG. 8A, a parenthesized superscript of a complex weight vector W is used to distinguish a sector, and a subscript of a complex weight vector W is used to distinguish an antenna element. A method of filling the transmission/reception lookup table with complex weight vector values is divided into a method for a case where a voice service is provided through a ULA antenna, a method for a case where a data service is provided through a ULA antenna, and a method for a case where a UCA antenna is used, and the methods for the 3 cases will be described with reference to FIGs. 8B, 8C and 8D, respectively. Complex weight vector values stored in the transmission lookup table 230 of FIG. 7 and the reception lookup table described below, have different values but are equal to each other in basic form in all of the 3 cases as illustrated in FIG. 8B to 8D.

FIG. 8B illustrates an example of a structure of a transmission/reception lookup table for a voice service according to an embodiment of the present invention, applied to a ULA antenna structure. Because the ULA antenna shown in (A) of FIG. 5 forms a beam of a certain side with only 4 antenna elements located in the side of an equilateral triangle, all complex weights remaining after excluding the complex weights Wₐ, W_{b}, W_{c} and W_{d} corresponding to 4 antenna elements from reference vectors for setting complex weights of respective sectors are set to '0' in FIG. 8B. For example, because a voice service is provided with a 3-sector structure in this embodiment, the number of sectors is 3 and a beam of each sector is formed using the reference vectors each shifted by 4 antenna elements. The beam patterns formed in this method is illustrated in (A) of FIG. 6A.

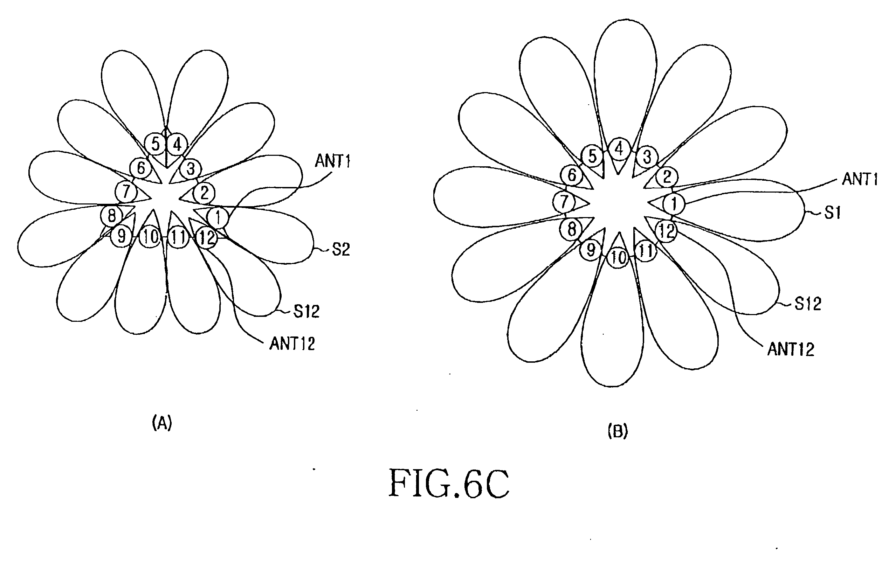

FIG. 8C illustrates an example of a structure of a transmission/reception lookup table for a data service according to an embodiment of the present invention, applied to a ULA antenna structure. For example, because a data service is provided with a 12-sector structure in this embodiment, the ULA antenna shown in (A) of FIG. 5 should form 4 narrow-width beams for each side of an equilateral triangle. (A) of FIG. 6C illustrates a structure of a ULA 12-sector structure in which 12 beams are formed. Two beams (for example, beams formed by a 1^{st} antenna element and a 4^{th} antenna element in (A) of FIG. 6C) formed in both ends among 4 beams formed in one side of an equilateral triangle are equal to each other in beam pattern but different from each other only in direction. Likewise, two beams (for example, beams formed by a 2^{nd} antenna element and a 3^{rd} antenna element in (A) of FIG. 6C) formed in the center among the 4 beams are equal to each other in beam pattern but different from each other only in direction.

Therefore, in (A) of FIG. 6A, 2 reference vectors comprising a lookup table are required to set different beam patterns. Of the two reference vectors, one reference vector is used to form a first sector and a fourth sector, and the other reference vector is used to form a second sector and a third sector. Here, it should be noted that when the reference vectors are used twice, the complex weights are opposite to each other in terms of their order. For example, referring to a first sector and a fourth sector of FIG. 8C, complex weights of the first sector are set in the order of Wₐ, W_{b}, W_{c}, W_{d}, whereas complex weights of the fourth sector are set in the order of W_{d}, W_{c}, W_{b}, Wₐ. Beams of the other 8 sectors (fifth sector to twelfth sector) are formed using the reference vectors each shifted by 4 antenna elements.

FIG. 8D illustrates an example of a structure of a transmission/reception lookup table for voice and data services according to an embodiment of the present invention, applied to a UCA antenna structure. Because the UCA antenna structure is a circular structure and forms a 3-sector structure or a 12-sector structure with 12 antenna elements, none of the complex weights Wₐ to W₁ of reference vectors is set to '0', unlike the ULA antenna structure. Complex weights forming respective sectors are made by shifting the reference vectors by one antenna element. The UCA 12-sector structure in which 12 beams are formed for a data service and the UCA 3-sector structure in which 3 beams are formed for a voice service are illustrated in (B) of FIG. 6C and (B) of FIG. 6D, respectively.

In FIG. 7, the beamforming unit 240 multiplies transmission signals S1 (t), S2(t), ..., Sm(t) transmitted to mobile stations (not shown) of respective subscribers by respective antenna elements ANT1 to ANTn output from the transmission lookup table 230. The beamforming unit 240 generates predetermined beamforming data for transmission beamforming by adding up the multiplied values according to the respective antenna elements ANT1 to ANTn, and outputs the generated beamforming data to a transmission signal converter 250. The transmission signal converter 250 converts the output of the beamforming unit 240 into an analog signal, frequency-up-converts the analog signal, and outputs the frequency-up-converted signal to a high power amplifier (HPA) 260. The high power amplifier 260 amplifies the output signals of the transmission signal converter 250, and transmits the amplified signals to mobile stations through a wireless network via corresponding antenna elements ANT1 to ANTn.

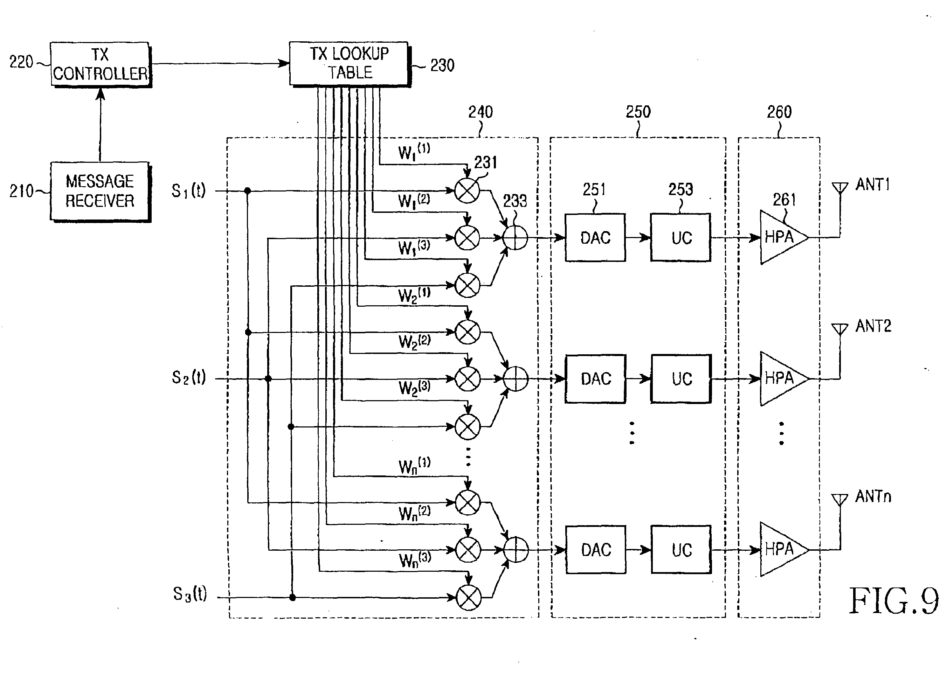

FIG. 9 is a block diagram illustrating structures of the beamforming unit 240 and the transmission signal converter 250 illustrated in FIG. 7, wherein transmission signals S1(t), S2(t) and S3(t) for 3 subscribers are transmitted via n antenna elements ANT1 to ANTn, by way of example. The beamforming unit 240 includes a plurality of multipliers 231 for multiplying the transmission signals S1(t), S2(t) and S3(t) by complex weight vectors for the antenna elements ANT1 to ANTn, and a plurality of adders 233 for outputting the beamforming data by adding up the multiplied values according to the antenna elements ANT1 to ANTn. The transmission signal converter 250 includes a plurality of digital-to-analog converters (DACs) 251 each connected to output terminals of the adders 233, for converting the beamforming data into analog signals, and a plurality of up-converters (UCs) 253 for frequency-up-converting the analog signals output from the DACs 251.

In FIGs. 7 and 9, when a change in transmission beam is required due to movement of a subscriber's mobile station, a new transmission control message including location information of the mobile station is delivered from an upper layer to the transmission controller 220 through the message receiver 210. For example, the upper layer refers to a base station controller (BSC). The transmission controller 220 modifies complex weight vector values of the transmission lookup table 230 based on the transmission control message, and the transmission lookup table 230 outputs the modified complex weight vector values. The modification of the complex weight vectors can be performed in such a manner that beam IDs are set to be mapped to locations of the mobile stations.

According to the structure of FIGs. 7 and 9, for a voice service, a base station sets complex weight vectors such that a group of multiple antenna elements forms one sector and a plurality of antenna groups form the conventional 3-sector structure. For a data service, the base station sets the complex weight vectors such that each sector is formed by at least one antenna element. This sector modification is performed in such a manner that the transmission controller 220 receiving call discrimination information provided from the upper layer modifies complex weight vector output patterns of the transmission lookup table 230 according to call types.

Although for a data service, each antenna element manages one sector in this embodiment, various modifications can be made such that each sector can be managed by 2 antenna elements as long as the number of sectors for a data service is set larger than the number of sectors for a voice service.

A description will now be made of a reception apparatus for base station sector management, which corresponds to the transmission apparatus of FIG. 7.

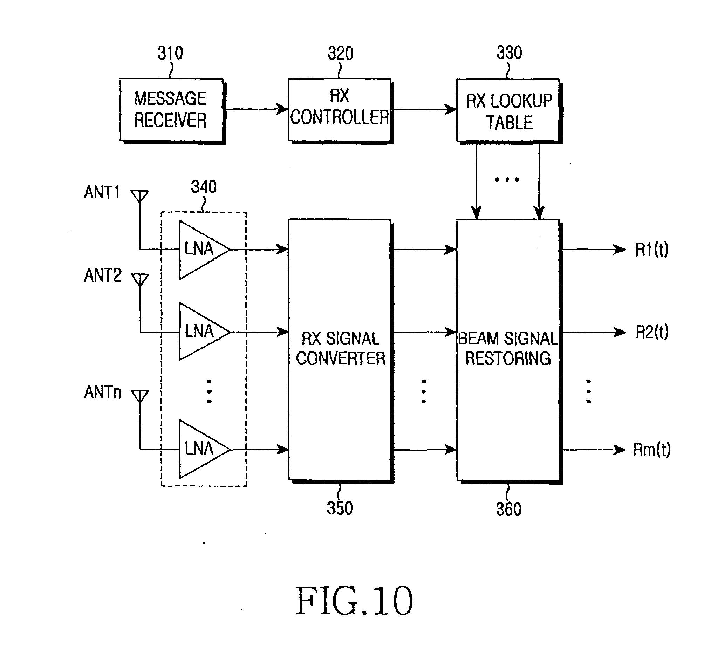

FIG. 10 is a block diagram illustrating a structure of a reception apparatus in a sector management apparatus of a base station according to an embodiment of the present invention. The reception apparatus receives a signal transmitted from a desired subscriber's mobile station by multiplying outputs of respective antenna elements by complex weight vectors for reception signal restoration, and receives the signal with optimum signal power by null-driving interference components to cancel signal interference.

Preferably, the reception apparatus of FIG. 10 includes n antenna elements ANT1 to ANTn like the transmission apparatus of FIG. 7. When a call is set up to each subscriber, a message receiver 310 receives a predetermined reception control message including call discrimination information for distinguishing a type of a voice call or a data call from an upper layer through a base station controller (BSC; not shown), decodes the received reception control message, and delivers the decoding result to a reception controller 320. The reception control message includes FA information as well as the call discrimination information. In addition, the reception control message can include modification information of complex weight vectors due to a change in position of a mobile station.

The reception controller 320 analyzes the reception control message, performs the overall control operation for beam signal restoring separated for a voice service or a data service with a reception lookup table 330 according to a corresponding call, and outputs predetermined address information instructing the output of corresponding complex weight vectors. The complex weight vectors in the reception lookup table 330 should be pre-stored in the manner shown in FIGS. 8B to 8D.

When complex weight vectors for data reception should be modified due to a change in position of a subscriber's mobile station (not shown), the reception controller 320 receives a reception control message from the upper layer through the message receiver 310 in the method used in the transmission apparatus. The reception controller 320 modifies complex weight vector values in the reception lookup table 330 based on the reception control message, and outputs the modified complex weight vector values.

In FIG. 10, respective subscriber signals received through a plurality of antenna elements ANT1 to ANTn are amplified by a low noise amplifier (LNA) 340, and then provided to a reception signal converter 350. The reception signal converter 350 converts the amplified signals into digital signals by performing frequency down conversion and filtering thereon, and outputs the resultant signals to a beam signal restoring unit 360. The beam signal restoring unit 360 multiplies the digital-converted reception signals of the respective antenna elements ANT1 to ANTn by the complex weight vector values for respective subscribers, provided from the reception lookup table 330. The beam signal restoring unit 360 outputs reception signals R1(t), R2(t), ..., Rm(t) for corresponding subscribers by summing the multiplied values according to respective subscriber signals.

Although the message receiver 310, the reception controller 320 and the reception lookup table 330 of FIG. 10 are separately configured to correspond to the message receiver 210, the transmission controller 220 and the transmission lookup table 230 of FIG. 7 in this embodiment for convenience, the corresponding elements in the transmission apparatus and the reception apparatus can be integrated into one body. In addition, the beamforming unit 240 of FIG. 7 and the beam signal restoring unit 360 can be configured with a single board such as a Universal channel Element Packet data board Assembly (UEPA), and the transmission signal converter 250 of FIG. 7 and the reception signal converter 350 of FIG. 10 can also be configured with a single Universal Transmitter Receiver board Assembly (UTRA).

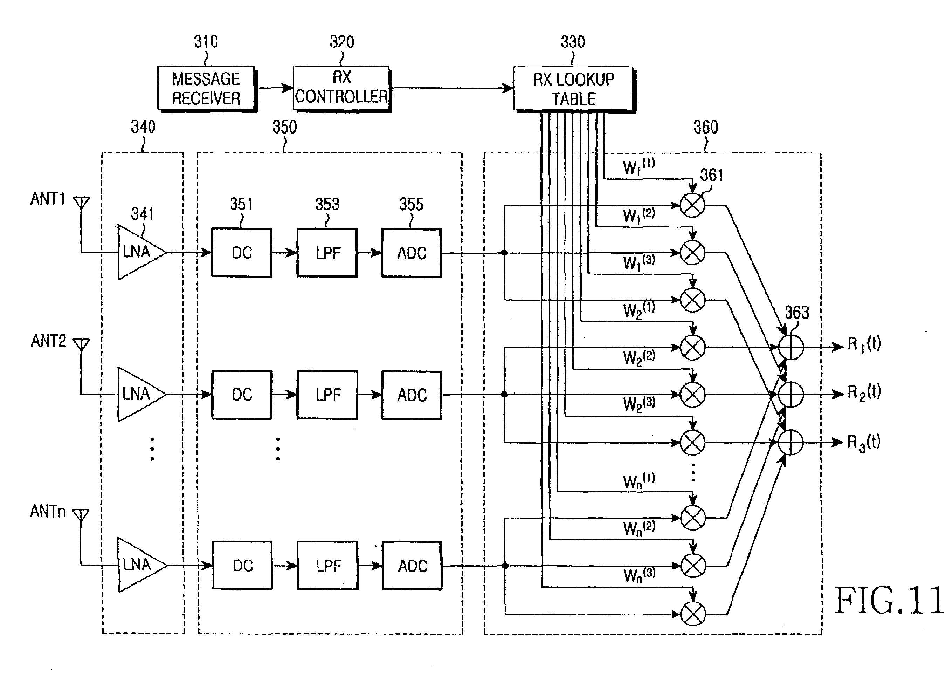

FIG. 11 is a block diagram illustrating structures of the reception signal converter 350 and the beam signal restoring unit 360 illustrated in FIG. 10,
wherein reception signals R1(t), R2(t) and R3(t) for 3 subscribers are received via n antenna elements ANT1 to ANTn, by way of example.

In FIG. 11, the reception signal converter 350 comprises a plurality of down-converters (DCs) 351, low pass filters (LPFs) 353, and analog-to-digital converters (ADCs) 355. The down-converters 351, are connected to output terminals of respective amplifiers 341 in the low noise amplifier 340, frequency-down-convert reception signals, and the low pass filters 353 remove noises from the output signals of the down-converters 351. The ADCs 355 convert the output signals of the low pass filters 353 into digital signals, and output the digital signals to the beam signal restoring unit 360. The digital-converted reception signals of the respective antenna elements ANT1 to ANTn are independently multiplied by complex weight vectors for the respective subscribers by a plurality of multipliers 361. A plurality of adders 363 sums the multiplied values according to respective subscriber signals, restoring reception signals R1(t), R2(t) and R3(t) of the corresponding subscribers, from which a beamforming effect is removed. According to the foregoing structure, the number of sectors used for a data service is larger than the number of sectors used for a voice service in a process of receiving and restoring subscriber signals.

As described above, the embodiments of present invention can provide different multi-sector structures to a voice service and a data service according to a system condition. In addition, the embodiments of present invention can use the switched beam antenna or the adaptive array antenna, and can also be applied to the cell sculpting scheme.

Table 1 illustrates cell throughputs during a data service in the conventional 3-sector base station and a 12-sector base station with a smart antenna, and the cell throughputs are given through simulations on a base station system with CDMA2000 1xEV-DV forward link and 1xEV-DO reverse link.

**Table 1**

| Array Type | Beamforming | HPBW | Antenna Spacing | Forward Link Cell Throughput (kbps) | Reverse Link Cell Throughput (kbps) |
|---|---|---|---|---|---|
| Existing | No | 65° | 10λ | 2809.5 (100%) | 828.54(100%) |
| BS ANT | | | | | |
| ULA | Yes | 65° | 0.5λ | 7687.2 (274%) | 1234.8 (149%) |
| | | 110° | 0.5λ | 7479.6 (266%) | 1450.8 (175%) |
| UCA | Yes | 65° | 0.5λ | 7646.4 (272%) | 1377.8 (166%) |
| | | 110° | 0.5λ | 7418.4 (264%) | 1324.8 (160%) |

In Table 1, HPBW denotes a half-power beam width, λ, denotes a wavelength of a carrier, and parenthesized values represent cell throughputs of the ULA and the UCA of FIG. 5 compared with the existing base station antenna in percentage terms. Assuming that the cell throughput of the existing 3-sector structure is 100%, the cell throughput of the proposed 12-sector structure is 2.5 times or more greater than that of the existing 3-sector structure in the forward link.

Unlike the conventional base station system in which a voice service and a data service are integratedly managed in a 3-sector structure, the present invention independently performs sector management for the voice service and sector management for the data service according to the characteristics of the voice service and the data service in an antenna beamforming process, thereby increasing system capacity.

While the invention has been shown and described with reference to certain preferred embodiments thereof, it should be understood by those skilled in the art that various changes in form and details may be made therein without departing from the spirit and scope of the invention as defined by the appended claims.

## Claims

1. A method for managing sectors in a transmission operation of a base station including a smart antenna system forming directional beams using a plurality of antenna elements, the method comprising the steps of:
determining whether a call connected to a mobile station is a voice call or a data call;
multiplying a transmission signal to the mobile station by predetermined complex weight vectors selected according to the call type; and
forming a transmission beam for a corresponding sector by summing the multiplied values according to the antenna elements.

2. The method of claim 1, wherein the number of sectors formed by the base station is set less than or equal to the number of the antenna elements.

3. The method of claim 1, wherein the step of forming a transmission beam comprises the step of forming a common transmission beam with a group of transmission beams formed by the antenna elements, if the call connected to the mobile station is a voice call.

4. The method of claim 1, wherein the step of forming a transmission beam comprises the step of allocating different pseudo-random noise (PN) code offsets to respective sectors, if the call connected to the mobile station is a data call.

5. The method of claim 1, further comprising the step of, when the call connected to the mobile station is a voice call and the antenna elements are arranged according to a Uniform Linear Array (ULA) format, forming a common beam for a corresponding sector with antenna elements located in the same side of a triangle formed by the ULA.

6. The method of claim 5, wherein a beam of each sector is formed by defining the complex weight vectors for antenna elements located in one of respective sides of the triangle as reference vectors, and shifting the reference vectors as complex weight vectors for another side.

7. The method of claim 6, wherein complex weight vectors corresponding to the antenna elements located in a side where a beam is formed among the plurality of complex weight vectors comprising the reference vectors are set to predetermined values, and complex weight vectors corresponding to antenna elements of the other sides are all set to '0'.

8. The method of claim 1, further comprising the step of, when the call connected to the mobile station is a data call and the antenna elements are arranged according to a Uniform Linear Array (ULA), forming a directional beam for a corresponding sector with antenna elements located in the same side of a triangle formed by the ULA.

9. The method of claim 8, wherein the step of forming a directional beam comprises the steps of:
setting the complex weight vectors for the antenna elements located in one side of the triangle as reference vectors; and
forming a beam of each sector by shifting the reference vectors as complex weight vectors for another side of the triangle, wherein the number of the reference vectors corresponds to the number of pairs of beams which are equal to each other in beam pattern but different from each other in direction.

10. The method of claim 8, wherein when directional beams which are equal to each other in size but different from each other in direction are formed in the same side of the triangle, complex weight vectors acquired by setting the complex weights of the reference vectors in the opposite order are used as corresponding complex weight vectors.

11. The method of claim 1, wherein when the antenna elements are arranged in a form of a Uniform Circular Array (UCA), the number of the complex weight vectors forming the respective sectors corresponds to the number of the antenna elements.

12. The method of claim 1, wherein when the antenna elements are arranged according to a Uniform Circular Array (UCA) format, complex weight vectors for a reference sector are defined as reference vectors and complex weight vectors for another sector are set by shifting the reference vectors by a predetermined unit value.

13. The method of claim 1, further comprising the steps of:
if there is a change in position of the mobile station, receiving a message including information on the changed position of the mobile station from an upper layer of the base station;
modifying the complex weight vectors based on the information on the changed position; and
re-forming the transmission beam using the modified complex weight vectors.

14. The method of claim 1, wherein when the call connected to the mobile station is a voice call, the step of forming a transmission beam comprises the step of forming the directional beams according to at least one antenna element with the transmission beams formed by the antenna elements, and allocating the same PN code offset to antenna elements included in the same sector.

15. A method for managing sectors in a reception operation of a base station including a smart antenna system forming directional beams using a plurality of antenna elements, the method comprising the steps of:
determining whether a call connected to a mobile station is a voice call or a data call;
multiplying a reception signal from the mobile station by complex weight vectors selected according to the call type; and
restoring the reception signal by summing the multiplied values according to the antenna elements;

16. The method of claim 15, wherein the number of sectors formed by the base station is set less than or equal to the number of the antenna elements.

17. The method of claim 15, wherein when the call connected to the mobile station is a voice call and the antenna elements are arranged in a form of a Uniform Linear Array (ULA), the step of restoring the reception signal comprises the step of defining complex weight vectors for antenna elements located in one of respective sides of a triangle formed by the ULA as reference vectors, shifting the reference vectors as complex weight vectors for another side, and restoring the reception signal with the shifted complex weight vectors.

18. The method of claim 17, wherein complex weight vectors corresponding to antenna elements receiving a signal from the mobile station among a plurality of complex weight vectors comprising the reference vectors are set to predetermined values, and complex weight vectors corresponding to the other antenna elements are all set to '0'.

19. The method of claim 15, wherein if the call connected to the mobile station is a data call and the antenna elements are arranged according to a Uniform Linear Array (ULA) format, the step of restoring the reception signal further comprises the steps of:
defining complex weight vectors for antenna elements located in a side at which the signal from the mobile station is received, among sides of a triangle formed by the ULA, as reference vectors; and
setting complex weight vectors for antenna elements forming beams which are equal in size but different in direction to/from those of antenna elements using the reference vectors among the antenna elements at which the signal from the mobile station is received, in the opposite order of complex weights of the reference vectors, wherein the reference vectors are set such that the number of the reference vectors corresponds to the number of pairs of beams which are equal to each other in beam pattern but different from each other in direction.

20. The method of claim 15, wherein when the antenna elements are arranged according to a Uniform Circular Array (UCA) format, the complex weight vectors are set such that the number of the complex weight vectors corresponds to the number of the antenna elements.

21. The method of claim 15, wherein when the antenna elements are arranged according to a Uniform Circular Array (UCA) format, complex weight vectors for a reference sector are defined as reference vectors and complex weight vectors for another sector are set by shifting the reference vectors by a predetermined unit value.

22. The method of claim 15, further comprising the steps of:
if there is a change in position of the mobile station, receiving a message including information on the changed position of the mobile station from an upper layer of the base station;
modifying the complex weight vectors based on the information on the changed position; and
restoring the reception signal using the modified complex weight vectors.

23. A transmission sector management apparatus of a base station including a smart antenna system forming directional beams using a plurality of antenna elements, the apparatus comprising:
a message receiver for receiving a predetermined transmission control message comprising call discrimination information indicating a voice call or a data call, from an upper layer when a call is connected to a mobile station;
a transmission lookup table for storing a plurality of complex weight vectors for transmission beamforming separated according to the call type;
a transmission controller for receiving the transmission control message, performing an overall control operation for sector and beam forming according to the call type based on the transmission control message, and selecting corresponding complex weight vectors; and
a beamforming unit for multiplying a transmission signal from the mobile station by the complex weight vectors selected by the transmission controller, and forming transmission beams by summing the multiplied values according to antenna elements.

24. The apparatus of claim 23, wherein the transmission controller forms the sectors such that the number of the sectors is less than or equal to the number of the antenna elements.

25. The apparatus of claim 23, wherein when the call connected to the mobile station is a voice call, the transmission controller selects the complex weight vectors such that transmission beams by the antenna elements form at least one common beam group.

26. The apparatus of claim 23, wherein when the call connected to the mobile station is a data call, the transmission controller allocates different pseudo-random noise (PN) code offsets to respective sectors.

27. The apparatus of claim 23, wherein when the call connected to the mobile station is a voice call and the antenna elements are arranged according to a Uniform Linear Array (ULA) format, the transmission controller controls the beamforming unit such that a common beam for corresponding sectors is formed through antenna elements located in the same side of a triangle form by the ULA.

28. The apparatus of claim 23, wherein when the call connected to the mobile station is a data call and the antenna elements are arranged according to a Uniform Linear Array (ULA) format, the transmission controller controls the beamforming unit such that the directional beams for corresponding sectors are formed through antenna elements located in the same side of a triangle formed by a ULA.

29. The apparatus of claim 23, wherein when the antenna elements are arranged according to a Uniform Circular Array (UCA) format, the number of the complex weight vectors for forming respective sectors corresponds to the number of the antenna elements.

30. The apparatus of claim 23, wherein when there is a change in position of the mobile station, the message receiver receives a message including information on the changed position of the mobile station from the upper layer, the transmission controller modifies the complex weight vectors based on the information on the changed position, and the beamforming unit re-forms the transmission beams using the modified complex weight vectors.

31. A reception sector management apparatus of a base station including a smart antenna system forming directional beams using a plurality of antenna elements, the apparatus comprising:
a message receiver for receiving a predetermined reception control message including call discrimination information indicating a voice call or a data call, from an upper layer when a call is connected to a mobile station;
a reception lookup table for storing a plurality of complex weight vectors for beam signal restoration separated according to the call type;
a reception controller for receiving the reception control message, performing an overall control operation for beam signal restoration according to the call type based on the reception control message, and selecting corresponding complex weight vectors; and
a beam signal restoring unit for multiplying a reception signal from the mobile station by the complex weight vectors selected by the reception controller, and restoring the reception signal by summing the multiplied signals according to a corresponding subscriber signal.

32. The apparatus of claim 31, wherein when the call connected to the mobile station is a data call and the antenna elements are arranged according to a Uniform Linear Array (ULA) format, antenna elements located in the same side of a triangle formed by the ULA receive a signal from a mobile station located in a corresponding sector.

33. The apparatus of claim 31, wherein when the antenna elements are arranged according to a Uniform Circular Array (UCA) format, the number of the complex weight vectors corresponds to the number of the antenna elements.

34. The apparatus of claim 31, wherein when there is a change in position of the mobile station, the message receiver receives a message including information on the changed position of the mobile station from the upper layer, the reception controller modifies the complex weight vectors based on the information of the changed position, and the beam signal restoring unit restores the reception signal using the modified complex weight vectors.
